# FASCICULE DE BREVET EUROPEEN

(11) **EP 2 111 116 B1**
(45) Date de publication et mention de la délivrance du brevet: **01.04.2015**
(21) Numéro de dépôt: 08762083.7
(22) Date de dépôt: 13.02.2008
(51) Int. Cl.: A23B 7/154

(54) **COMBINAISON D'ESTERS DE L'ACIDE ABIETIQUE AVEC DU LIMONENE ET LEUR UTILISATION POUR L'ENROBAGE DES FRUITS OU LEGUMES**
KOMBINATIONEN AUS ABIETINSÄUREESTERN MIT LIMONEN SOWIE DEREN VERWENDUNG ZUR BESCHICHTUNG VON OBST ODER GEMÜSE
COMBINATION OF ABIETIC ACID ESTERS WITH LIMONENE AND USE THEREOF FOR COATING FRUIT OR VEGETABLES

(30) Priorité: 16.02.2007 FR 0753308; 10.07.2007 FR 0756378
(43) Date de publication de la demande: 28.10.2009
(73) Titulaire: XEDA INTERNATIONAL, 13670 Saint-Andiol (FR)
(72) Inventeur: SARDO, Alberto, F-13160 Chateaurenard (FR)
(74) Mandataire: Jacobson, Claude
(86) Numéro de dépôt international: PCT/FR2008/050233
(87) Numéro de publication internationale: WO 2008/104711

(56) Documents cités:
- EP-A- 1 106 070
- CN-A- 1 409 973
- ES-A1- 2 183 674
- FR-A- 2 786 664
- US-A- 2 755 189
- US-A1- 2006 222 674

## Description

Les fruits et légumes, notamment les agrumes, sont généralement enrobés de cire avant leur commercialisation pour améliorer leur conservation et leur aspect pour le consommateur, voir par exemple FR 2786664 ou US 2006/222674

Les résines alimentaires comprennent notamment les résines de type gomme laque, résine de pin appelée aussi colophane, les esters de l'acide abiétique, notamment avec le glycérol ou le pentaérythritol. Elles sont notamment utilisées pour l'enrobage des agrumes. Néanmoins, leur utilisation est limitée du fait de leur faible solubilité dans l'éthanol, solvant accepté sur le plan alimentaire. Il a parfois été envisagé de solubiliser ces résines ou leur mélange dans l'alcool dans l'eau en milieu basique, par exemple en présence de soude, potasse. Cependant, la présence de résidus alcalins dans l'enrobage final des fruits fragilise l'enrobage, notamment face à l'humidité. L'utilisation d'agents alcalins alternatifs tels que les alcanolamines n'est par ailleurs pas autorisée en Europe.

Les esters de l'acide abiétique, aussi appelé colophane, notamment avec le glycérol ou le pentaérythritol, sont utilisables dans l'industrie alimentaire, plus particulièrement pour l'enrobage des agrumes. Néanmoins, leur utilisation est limitée du fait de leur faible solubilité dans l'éthanol, solvant accepté sur le plan alimentaire.

Les cires alimentaires naturelles ou synthétiques sont également utilisées pour l'enrobage, dans l'industrie alimentaire. Les cires ont des caractéristiques visuelles et de perméabilité aux gaz particulièrement avantageuses, supérieures à celles des résines, notamment pour le contrôle de la perte de poids, de la maturation et de la qualité des fruits ou légumes ainsi enrobés. Néanmoins, les cires sont généralement insolubles dans les solvants acceptés sur le plan alimentaire, notamment l'alcool. L'application de cire en fusion n'est pas réalisable sur les fruits ou légumes. Par conséquent, les cires sont généralement appliquées sous forme d'émulsion, dans l'eau, avec des émulsifiants anioniques ou non ioniques, éventuellement en mélange avec une ou plusieurs résines naturelles telles que celles précitées.

Les huiles essentielles sont généralement de bons solvants. Néanmoins, ces huiles sont peu utilisées à cause de leur volatilité relativement basse. Elles nécessitent, par conséquent, un temps de séchage très long.

Par ailleurs, les terpènes ont une phytotoxicité importante et sont souvent très agressifs pour la peau des agrumes.

Il est donc désirable de mettre à disposition de nouvelles compositions améliorées à base de terpènes et d'acide abiétique pour l'enrobage des fruits ou légumes.

Il a maintenant été mis au point des compositions d'enrobage de fruits ou légumes, notamment des agrumes, et permettant d'éviter les problèmes de solubilité discutés ci-dessus.

Par ailleurs, il a été découvert que la présence d'un ou plusieurs terpènes dans les compositions d'enrobage précitées permettait d'améliorer grandement les qualités d'enrobage. En effet, sans être lié par la théorie, il semblerait que le(s) terpène(s), grâce à son point d'ébullition élevé, est présent jusqu'au séchage parfait de cire : en maintenant la solubilité jusqu'à la fin du séchage, l'enrobage est ainsi parfaitement appliqué.

Il a maintenant été mis au point des compositions à base de terpènes et d'esters d'acide abiétique pour le traitement des fruits et légumes, notamment des agrumes, et permettant d'éviter les inconvénients discutés ci-dessus.

Ainsi, selon un premier objet, la présente invention concerne un procédé d'enrobage des fruits et légumes, notamment des agrumes, comprenant l'application d'une composition comprenant un ou plusieurs ester(s) d'acide abiétique ou leurs mélanges, en combinaison avec le limonène, en solution dans l'ethanol.

De préférence, l'application de la composition est effectuée après récolte et avant la commercialisation des fruits et légumes, à température ambiante, par tout moyen habituellement utilisé pour ce type d'enrobage. Les compositions selon l'invention peuvent être appliquées une ou plusieurs fois.

La composition est de préférence appliquée par aspersion en ligne. Le cirage des fruits ou légumes s'effectue généralement de la façon suivante.

Selon un premier mode de réalisation, les fruits ou légumes sont lavés sur des lignes de brosses puis essorés et séchés sur des lignes de spongieux pour arriver propres et secs sur des lignes de brosses spécialement conçues pour le cirage des fruits ou légumes. Des asperseurs envoient la composition sur les fruits ou légumes alors qu'ils se déplacent sur les brosseuses afin de permettre l'application sur les fruits ou légumes d'une couche mince liquide. Les fruits ou légumes passent ensuite par un tunnel de séchage : l'évaporation de l'eau permet ainsi de laisser sur les fruits ou légumes une pellicule protectrice d'environ 2 microns.

Un second mode de réalisation comprend les étapes consistant à sécher préalablement le fruit ou légume et ensuite l'asperger avec la composition comprenant un solvant volatile quand il défile sur un convoyeur à rouleau, le séchage à l'air se faisant par simple évaporation du solvant.

La troisième méthode d'application comprend les étapes consistant à déposer la composition sur les fruits ou légumes, déjà placés dans les plateaux, au moyen d'un asperseur manuel.

On préfère cependant l'application en ligne car elle laisse sur le fruit ou le légume une pellicule protectrice plus mince et plus homogène qu'avec cette dernière méthode d'application.

De préférence, les compositions sont appliquées sur des fruits ou légumes préalablement séchés.

Les combinaisons d'esters d'acide abiétique et de limonène sont en solution dans l'ethanol.

De préférence, lesdites compositions comprennent :
- entre 1 % et 35 % en poids d'une résine à base d'ester(s) d'acide abiétique ou leurs mélanges, de préférence entre 3 % et 15 %.
- entre 2 % et 80 % en poids de limonène, de préférence entre 5 % et 30 %,
- entre 10 % et 95 % d'éthanol, de préférence entre 50 % et 95 %, lesdits résines et limonènes étant en solution dans l'éthanol.

Lesdites solutions peuvent également comprendre un ou plusieurs alcalis tels que la soude ou la potasse. Généralement, les compositions selon l'invention comprennent de 0,5 à 3% en poids d'alcali.

Lesdites compositions peuvent comprendre en outre une ou plusieurs résines.

Selon un autre objet, la présente invention concerne également ces solutions.

La(es) résine(s) sont, de préférence, à hauteur de 1 à 5%.

Les pourcentages indiqués ici sont donnés en poids.

De telles compositions présentent les avantages suivants :
- faible phytotoxicité pour le fruit ou légume ;
- utilisation d'ingrédients autorisés sur le plan alimentaire ;
- haute qualité de recouvrement.

Les compositions selon l'invention conviennent tout particulièrement à l'enrobage des fruits et légumes, notamment des agrumes, par le procédé selon l'invention.

La présente invention concerne également le procédé de préparation des compositions selon l'invention.

Les compositions selon l'invention ainsi préparées sont de préférence appliquées pures, sans dilution préalable.

La quantité de composition devant être appliquée dépend de la nature des fruits ou légumes concernés et du mode d'application sélectionné. Généralement, on applique entre 100 et 5000 cm³ de la composition par tonne de fruits ou légumes, préférentiellement entre 500 et 1500 cm³/t.

Lorsque les compositions en solution dans un solvant sont appliquées, le solvant est généralement évaporé à l'air.

A titre de résines, on peut notamment citer les résines de type gomme laque (E904), résines de pin, l'acide abiétique ou les esters de l'acide abiétique tels que les esters avec le glycérol ou le pentaérythritol (E445), les résines estérifiées modifiées chimiquement par création de l'adduct maléique ou fumarique ou leurs mélanges.

L'expression « ester(s) d'acide abiétique » comprend un ou plusieurs esters de l'acide abiétique avec un alcool, leur(s) mélange(s) ainsi que toute résine comprenant un ou plusieurs ester(s) d'acide abiétique ou leur(s) mélange(s). On préfère notamment l'ester d'acide abiétique avec le glycérol ou le pentaérythritol, plus préférentiellement l'abiétate de glycérol. On peut notamment citer les résines commerciales Ester Gum, Pexalyn® ou Pentalyn® commercialisées par Hercules Inc., ou Permalyn® commercialisée par Eastman.

L'expression "fruits et légumes" fait préférentiellement référence au traitement des agrumes, tels que les oranges, citrons, clémentines, pamplemousses, mandarines.

L'expression "alcool léger" fait référence aux alcools comprenant 1 à 6 atomes de carbone, de préférence l'éthanol.

Par l'expression "alcali", on entend toute base, organique ou minérale, tel que l'hydroxyde de potassium ou hydroxyde de sodium, ammoniaque ou amine(s).

Les exemples suivants sont donnés à titre illustratif et non limitatif de la présente invention.

### Exemple 1 : solution dans l'éthanol

Une solution a été préparée à partir de 10 g de résine d'abiétate de glycérol, 18 g de limonène et 3 g d'éthanol de façon à solubiliser les différents ingrédients.

Puis, le complément d'éthanol a été ajouté de façon à obtenir 100 mL de solution. Une solution parfaitement soluble et stable a été ainsi obtenue.

### Exemple 2 : solution dans l'éthanol

Une solution a été préparée à partir de 10 g de résine d'abiétate de glycérol, 18 g de limonène et 56 g d'éthanol de façon à solubiliser les différentes ingrédients.

Une solution parfaitement soluble et stable a été ainsi obtenue.

Les exemples 3 à 9 ne sont pas couverts par les revendications.

### Exemple 3 préparation d'une émulsion ionique

2,5 g de limonène ont été mélangés à 2 g de résine de glycérol d'abiétate. 17 g de cire de carnauba ont été ajoutés et mélangés. Le mélange obtenu a été émulsifié dans l'eau par ajout de 5 g d'acide oléique et 1 g d'hydroxyde de potassium, le volume de 100 ml ayant été complété avec l'eau. Une émulsion a ainsi été obtenue.

### Exemple 4 : préparation d'une émulsion non ionique

On a opéré comme dans l'exemple 2, mais en utilisant 4 g d'émulsifiant non ionique composé d'un mélange de 1 g de sucroester, 1,5 g de sorbitan monoléate éthoxylé et 1 g de lécithine.

### Exemple 5 : traitement d'oranges

Les fruits sont lavés avec une solution détergente puis rincés et séchés parfaitement. L'émulsion de résine (Exemple 3) est appliquée, à la dose de 1,5L par tonne de fruits, sous pression, par des gicleurs placés au-dessus du convoyeur sur lequel passent les fruits. Un ventilateur rotatif aspire l'air de manière à aider au séchage des fruits et évacuer les solvants évaporés vers l'extérieur. Les fruits cirés et séchés sont ensuite emballés.

### Exemple 6 : traitement d'oranges

Les fruits sont lavés avec une solution détergente puis rincés et séchés parfaitement. La solution de résine (Exemple 1) est appliquée, à la dose de 1,5L par tonne de fruits, sous pression, par des gicleurs placés au-dessus du convoyeur sur lequel passent les fruits. Les fruits sèchent par évaporation des solvants à l'air.

### Exemple 7 : préparation d'une émulsion ionique

2,5 g de limonène ont été mélangés à 2 g de résine de glycérol d'abiétate. 17 g de cire de carnauba ont été ajoutés et mélangés. Le mélange obtenu a été émulsifié dans l'eau par ajout de 5 g d'acide oléique et 1 g d'hydroxyde de potassium, le volume de 100 ml ayant été complété avec l'eau. Une émulsion a ainsi été obtenue.

### Exemple 8 : préparation d'une émulsion non ionique

On a opéré comme dans l'exemple 7, mais en utilisant 4 g d'émulsifiant non ionique composé d'un mélange de 1 g de sucroester, 1,5 g de sorbitan monoléate éthoxylé et 1 g de lécithine.

### Exemple 9 : préparation d'une émulsion de cires sans résines

21 parts de carnauba sont dissoutes dans 2 parts de limonène, 5,5 parts d'acide oléique, 4 parts d'ammoniac à 28 %. Le mélange est chauffé à 100°, le complément d'eau est ajouté à 100°, sous forte agitation, jusqu'à parfaite mise en émulsion du mélange.

### Exemple 10 : traitement d'orangers

Les fruits sont lavés avec une solution détergente puis rincés et séchés parfaitement. Les compositions des Exemples 7 et 9 sont appliquées, à la dose de 1,5L par tonne de fruits, sous pression, par des gicleurs placés au-dessus du convoyeur sur lequel passent les fruits. Les fruits sont séchés en passant par un tunnel de séchage à l'air chaud. Les fruits cirés et séchés sont ensuite emballés.

Les fruits ont été évalués au niveau de l'apparence et de la perte de poids en les comparant avec une formulation classique à base de cire de carnauba et gomme laque (produit A) et avec une cire de polyéthylène et d'ester de résines modifiées (produit B). Les résultats suivant ont été obtenus :

| **Type de cire** | **Perte de poids après 1 mois de stockage à 5°C** | **Brillance initiale après le cirage (échelle 0 à 10)** | **Brillance finale après 1 mois de stockage à 5°C (échelle 0 à 10)** |
|---|---|---|---|
| Produit A (carnauba/gomme laque) | 28% | 7,5 | 7 |
| Produit B (polyéthylène/résine) | 15% | 10 | 7 |
| Exemple 7 (carnauba/gum A/limonène) | 37% | 9 | 8,5 |
| Exemple 9 (carnauba/limonène) | 50% | 8,5 | 8 |

## Revendications

1. Procédé d'enrobage des fruits ou légumes, comprenant l'application d'une composition comprenant un ou plusieurs ester(s) d'acide abiétique ou leurs mélanges, en combinaison avec le limonène, en solution dans l'éthanol.

2. Procédé selon la revendication 1 tel que l'ester(s) d'acide abiétique est(sont) choisi(s) parmi l'ester d'acide abiétique avec le glycérol ou le pentaérythritol, ou toute résine contenant un ou plusieurs ester(s) d'acide abiétique ou leurs mélanges.

3. Procédé selon la revendication 1 ou 2 tel que l'(les) ester(s) d'acide abiétique est une résine ester gum.

4. Procédé selon l'une quelconque des revendications précédentes tel que ladite composition est appliquée après récolte et avant commercialisation des fruits et légumes.

5. Procédé selon l'une quelconque des revendications précédentes tel qu'on applique entre 100 et 5000 cm³ de solution par tonne de fruits ou légumes.

6. Procédé selon l'une quelconque des revendications précédentes tel que ladite composition est appliquée par aspersion sur des fruits ou légumes secs.

7. Procédé selon l'une quelconque des revendications précédentes tel que lesdites compositions comprennent en outre une ou plusieurs résine(s).

8. Composition pour l'enrobage de fruits ou légumes comprenant :
- entre 1 % et 35 % en poids d'une résine à base d'ester(s) d'acide abiétique ;
- entre 2 % et 80 % en poids de limonène ;
- entre 10 % et 95 % d'éthanol,
lesdits résine et limonène étant en solution dans l'éthanol

9. Composition selon la revendication 8 comprenant en outre une ou plusieurs résine(s).

10. Composition selon la revendication 9 tel que la dite résine est la gomme laque (E904).

11. Composition selon la revendication 8 telle que les esters d'acide abiétique sont choisis parmi les esters de glycérol ou de pentaérythritol.

12. Procédé selon l'une quelconque des revendications 1 à 7 au moyen d'une composition selon l'une quelconque des revendications 8 à 11.

## Patentansprüche

1. Verfahren zum Überziehen von Obst oder Gemüse, welches das Aufbringen einer Zusammensetzung umfasst, die einen oder mehr Abietinsäureester oder deren Mischungen in Kombination mit Limonen, gelöst in Ethanol, umfasst.

2. Verfahren gemäß Anspruch 1, wobei der/die Abietinsäureester aus Abietinsäureester mit Glycerin oder Pentaerythrit oder irgendeinem einen oder mehrere Abietinsäureester oder deren Mischungen enthaltendem Harz ausgewählt wird/werden.

3. Verfahren gemäß Anspruch 1 oder 2, wobei der/die Abietinsäureester ein Estergummiharz ist/sind.

4. Verfahren gemäß irgendeinem der vorhergehenden Ansprüche, wobei die Zusammensetzung nach der Ernte und vor dem Vertrieb des Obstes und des Gemüses aufgebracht wird.

5. Verfahren gemäß irgendeinem der vorhergehenden Ansprüche, wobei zwischen 100 cm³ und 5000 cm³ Lösung pro Tonne Obst oder Gemüse aufgebracht werden.

6. Verfahren gemäß irgendeinem der vorhergehenden Ansprüche, wobei die Zusammensetzung durch Besprengen von trockenem Obst oder Gemüse aufgebracht wird.

7. Verfahren gemäß irgendeinem der vorhergehenden Ansprüche, wobei die Zusammensetzungen ferner ein oder mehrere Harz(e) umfassen.

8. Zusammensetzung zum Überziehen von Obst oder Gemüse, umfassend:
- zwischen 1 Gew.-% und 35 Gew.-% eines Harzes auf Abietinsäureesterbasis,
- zwischen 2 Gew.-% und 80 Gew.-% Limonen,
- zwischen 10 Gew.-% und 95 Gew.-% Ethanol,
wobei das Harz und das Limonen in Ethanol gelöst sind.

9. Zusammensetzung gemäß Anspruch 8, ferner ein oder mehrere Harz(e) umfassend.

10. Zusammensetzung gemäß Anspruch 9, wobei das Harz Gummilack (E904) ist.

11. Zusammensetzung gemäß Anspruch 8, wobei die Abietinsäureester aus Estern von Glycerin oder Pentaerythrit ausgewählt sind.

12. Verfahren gemäß irgendeinem der Ansprüche 1 bis 7 unter Verwendung einer Zusammensetzung gemäß irgendeinem der Ansprüche 8 bis 11.

## Claims

1. Method of coating fruit or vegetables, comprising the application of a composition comprising one or more abietic acid ester(s) or mixtures thereof, in combination with limonene in solution in ethanol.

2. Method according to Claim 1, wherein the abietic acid ester(s) is (are) chosen from amongst abietic acid ester with glycerol or pentaerythritol, or any resin containing one or more abietic acid ester(s) or mixtures thereof.

3. Method according to either Claim 1 or Claim 2, wherein the abietic acid ester(s) is/are a resin ester gum.

4. Method according to any one of the preceding claims, wherein the said composition is applied after harvesting and before marketing of the fruit and vegetables.

5. Method according to any one of the preceding claims, wherein between 100 and 5000 cm³ of solution are applied per tonne of fruit or vegetables.

6. Method according to any one of the preceding claims, wherein the said composition is applied by sprinkling on dried fruit or vegetables.

7. Method according to any one of the preceding claims, wherein the said compositions further comprise one or more resin(s).

8. Composition for coating fruit or vegetables comprising:
- between 1 % and 35 % by weight of a resin based on abietic acid ester(s);
- between 2 % and 80 % by weight of limonene;
- between 10 % and 95 % of ethanol;
said resin and limonene being in solution in ethanol.

9. Composition according to Claim 8, further comprising one or more resin(s).

10. Composition according to Claim 9, wherein the said resin is shellac (E904).

11. Composition according to Claim 8, wherein the abietic acid esters are chosen from amongst the esters of glycerol or pentaerythritol.

12. Method according to any one of Claims 1 to 7 by means of a composition according to any one of Claims 8 to 11.
